# EUROPÄISCHE PATENTSCHRIFT

(11) **EP 1 690 735 B1**
(45) Veröffentlichungstag und Bekanntmachung des Hinweises auf die Patenterteilung: **10.12.2008**
(21) Anmeldenummer: 06000761.4
(22) Anmeldetag: 14.01.2006
(51) Int. Cl.: B60Q 1/32, B60Q 1/30, B60Q 1/26, B60R 16/02

(54) **Fahrzeugleuchtenanordnung**
Vehicular lighting device
Dispositif d'éclairage pour un véhicule

(30) Priorität: 11.02.2005 DE 102005006593
(43) Veröffentlichungstag der Anmeldung: 16.08.2006
(73) Patentinhaber: KOMPLED GmbH & Co. KG, 89081 Ulm (DE)
(72) Erfinder: Koch, Josef, 89081 Ulm (DE)
(74) Vertreter: Weber, Gerhard

(56) Entgegenhaltungen:
- EP-A- 0 689 961
- EP-A- 1 362 745
- US-A- 2 991 116
- US-A- 5 025 350
- US-A- 6 121 551

## Beschreibung

Die Erfindung betrifft eine Fahrzeugleuchtenanordnung mit einer Seitenmarkierungsleuchtenanordnung und einer Heckleuchtenanordnung.

Längere Lastfahrzeuge weisen neben einer Heckleuchtenanordnung mit den typischen Leuchtenfunktionen Rücklicht, Bremslicht, Blinklicht sowie gegebenenfalls Rückfahrscheinwerfer, Nebelschlussleuchte und Kennzeichenbeleuchtung im Regelfall auch noch Seitenmarkierungsleuchten entlang der Längsseiten des Fahrzeugs auf. Besonders gebräuchlich sind dabei Leitungsführungen, bei welchen von einem Frontverteiler, welcher bei Anhängern auch ein Verbindungselement für die Steuerung und Leistungsversorgung durch das Zugfahrzeug bildet, ein zentraler Kabelstrang zu einem Heckverteiler führt. Von dem Heckverteiler aus sind über Einzelkabel die verschiedenen Heckleuchten und über nach vorne führende Seitenkabel die Seitenmarkierungsleuchten versorgt. Dabei können bei einem bekannten System der Firma Aspöck Spurhalteleuchten und Seitenmarkierungsleuchten mit jeweils eigenen Kabelabschnitten über Verbinder mit die Kabelisolierung durchdringenden Spitzenkontakten an das nach vorne führende Seitenkabel angeschlossen sein.

Die EP A 0 689 961 beschreibt eine Kraftfahrzeugbeleuchtungsanordnung, bei welcher an beiden Längsseiten des Fahrzeugs ein zweiadriges Kabel entlang geführt ist, an welches mittels die Kabelisolierung durchdringenden Spitzenkontakten Seitenmarkierungsleuchten angeschlossen sind. Die Seitenmarkierungsleuchten sind über Befestigungsbügel an dem Fahrzeug befestigt. Die zweiadrigen Kabel können bis zu hinteren Begrenzungsleuchten fortgeführt sein und diese gleichfalls mit einem frontseitigen Verteiler elektrisch verbinden. Aus der US-A-2991116 ist ein Fahrzeugbeleuchtungssystem bekannt, bei welchem ein Kabelsystem Heckleuchten und seitliche Umrissleuchten mit einem frontseitigen Verteiler verbindet. Die Kabel sind geschützt in Kanälen geführt und über Steckverbinder sind Kabelabschnitte untereinander und mit einzelnen Leuchten verbunden.

Der vorliegenden Erfindung liegt die Aufgabe zugrunde, eine vorteilhafte Fahrzeugleuchtenanordnung der eingangs genannten Art anzugeben.

Die Erfindung ist im Patentanspruch 1 beschrieben. Die abhängigen Ansprüche enthalten vorteilhafte Ausgestaltungen und Weiterbildungen der Erfindung.

Durch die Führung einer mehradrigen Leitungsanordnung entlang der Außenseite des Fahrzeugs, die Verbindung von Heckleuchten mit einer frontseitigen elektrischen Energiequelle über diese entlang der seitlichen Außenseiten geführte Leitungsanordnung und die Integration der Leitungsanordnung mit mehreren Seitenmarkierungsleuchten in einer Seitenleuchtenanordnung, in welcher die Seitenmarkierungsleuchten mit Adern der Leitungsanordnung kontaktiert sind, wird zum einen die mehradrige Leitungsanordnung zur elektrischen Versorgung sowohl der Seitenmarkierungsleuchten als auch der Heckleuchten aus einer frontseitigen Energiequelle ohne Umweg über einen heckseitigen Verteiler ausgenutzt, zum anderen entfällt durch die Integration der Seitenmarkierungsleuchten mit der Leitungsanordnung in die Seitenleuchtenanordnung der Anschluss einzelner Seitenmarkierungsleuchten an ein Kabel. Die erfindungsgemäße Anordnung führt zu einer erheblichen Verringerung des Montageaufwands am Fahrzeug. Die Seitenleuchtenanordnungen können weitgehend als einheitlich zu handhabende Baueinheiten vorbereitet sein.

Die Leitungsanordnung kann für verschiedene unabhängige Leuchtenfunktionen eigene Versorgungsleitungen, insbesondere in Kombination mit einer für mehrere Leuchtenfunktionen gemeinsamen Masseleitung enthalten. In anderer Ausführung können auch für mehrere unabhängige Leuchtenfunktionen gemeinsame Versorgungsleitungen vorliegen, wobei die einzelnen unabhängig betreibbaren Leuchten durch Steuersignale auf separaten, gegebenenfalls für mehrere Leuchtenfunktionen gemeinsamen Steuerleitungen oder in codierter Form auf den Versorgungsleitungen selbst übertragbar sind.

Vorteilhafterweise enthält die Leitungsanordnung mehr gegeneinander isolierte Adern als für die Versorgung der Seitenmarkierungsleuchten erforderlich ist. Die zusätzlichen Adern bilden vorteilhafterweise Versorgungsleitungen für einzelne unabhängig voneinander betreibbare Heckleuchten. Die unabhängig voneinander und von den Seitenmarkierungsleuchten betreibbaren Heckleuchten, z. B. Blinklicht, Bremslicht, Rückfahrscheinwerfer usw. können dann vorteilhafterweise auch in getrennten Stromkreisen unabhängig voneinander abgesichert sein.

Die Seitenleuchtenanordnung ist in bevorzugter Ausführung als ein Leuchtenkörper ausgeführt, in welchem die Leitungsanordnung und die Seitenmarkierungsleuchten, welche vorzugsweise lichtemittierende Dioden als Lichtquellen enthalten, integriert sind, von einem verfestigten Vergussmaterial im wesentlichen hohlraumfrei eingeschlossen sind. In dem Vergussmaterial eingeschlossen sein können auch noch elektronische Bauelemente, wie z. B. Vorwiderstände, Regler, Begrenzer etc. in funktionalem Zusammenhang mit dem Betrieb der Lichtquellen der Seitenmarkierungsleuchten sowie in vorteilhafter Weiterbildung auch Reflektorvorrichtungen.

Das Vergussmaterial kann beispielsweise ein thermoplastisches Material sein, insbesondere bei Ausführung des Leuchtenkörpers als Spritzgussteil oder als extrudiertes Profil. Das Vergussmaterial kann auch ein bei Umgebungsbedingungen gießbares, vorzugsweise dünnflüssiges und nach dem Ausgießen einer Form verfestigbares Material, insbesondere eine Mehrkomponentenmischung sein.

In transparenten flexiblen Kunststoff vergossene Lichtquellen mit zugehörigen Versorgungsleitungen sind an sich, z. B. als sogenannte Lichtschlauchanordnungen oder Lichtbänder (z. B. DE 696 32 848 T2) bekannt, wobei je nach Art der Ansteuerbarkeit, z. B. einfarbig, mehrfarbig, Lauflichteffekt usw. zwei oder mehr Leitungen in den Kunststoffschlauch eingebettet und mit den Lichtquellen mit Beschaltungsbauteilen kontaktiert sind.

Die Seitenleuchtenanordnung kann vorteilhafterweise in einer Profilhalterung an der seitlichen Außenwand des Fahrzeugs formschlüssig befestigt sein. Dabei kann die Seitenleuchtenanordnung selbst als Profil mit in Längsrichtung durchgehenden Haltestrukturen, z. B. als seitliche Vorsprünge im Profilquerschnitt ausgeführt sein. Gegenstrukturen am Fahrzeug können in Längsrichtung beabstandet als diskrete Halteelemente ausgeführt sein. In anderer Ausführung kann auf Fahrzeugseite an der Fahrzeugaußenwand ein Halteprofil zur Aufnahme der Seitenleuchtenanordnung vorgesehen sein. Die Seitenleuchtenanordnung kann in anderer Ausführung auch auf eine Haltefläche am Fahrzeug aufgeklebt oder mit diskreten Befestigungselementen wie Schrauben, Nieten etc. befestigt sein.

Die Seitenleuchtenanordnung weist vorteilhafterweise im Schnitt quer zur Längsrichtung eine abgeflachte Form auf mit einer gegenüber der im wesentlichen vertikal parallel zur Fahrzeugseitenfläche verlaufenden Höhe des Querschnittsumrisses geringen, im wesentlichen horizontal senkrecht zur Fahrzeugseitenfläche gerichteten Breite auf. Die Breite beträgt vorteilhafterweise maximal 50 %, insbesondere maximal 30 % der Höhe.

Die Seitenleuchtenanordnung ist vorteilhafterweise flexibel, in der abgeflachten Form zumindest flexibel um eine zur Höhenrichtung parallele Biegekante. Insbesondere kann vorgesehen sein, die Seitenleuchtenanordnung oder zumindest die in dieser enthaltene Leitungsanordnung bis über eine vordere und/oder eine hintere Fahrzeugkante ohne Unterbrechung fortzusetzen und an einer solchen Kante von der Längsrichtung in eine Richtung quer zur Längsrichtung zur Fahrzeugmittellängsebene hin umzulenken. Die Seitenleuchtenanordnung bzw. die Leitungsanordnung kann dabei an der Frontseite eines Anhängers als Fahrzeug insbesondere bis zu einem frontseitigen Verteiler als Energiequelle geführt sein, über welchen das anhängerseitige Leitungssystem lösbar mit einem Zugfahrzeug verbunden ist. Heckseitig kann die Seitenleuchtenanordnung bzw. die Leitungsanordnung ohne Unterbrechung in eine Heckleuchtenanordnung fortgeführt sein.

In anderer vorteilhafter Ausführungsform kann die Seitenleuchtenanordnung an der Fahrzeuglängsseite frontseitig und/oder heckseitig an ein Kabel oder eine andere weiterführende Leitungsanordnung angeschlossen ist, wobei eine solche weiterführende Leitungsanordnung auf unterschiedliche, an sich bekannte Arten mit der Seitenleuchtenanordnung verbunden sein kann. Beispielsweise können die Adern der zu verbindenden Leitungsanordnungen freigelegt und miteinander verlötet und die Kontaktstellen danach wieder isoliert, z. B. umgossen werden. In anderer vorteilhafter Ausführung kann bereits bei der Herstellung der Seitenleuchtenanordnung mit deren Leitungsanordnung eine elektrische Anschlussvorrichtung, z. B. ein Teil einer zweiteiligen elektrischen Steckkupplung, mit den Leitungen der Leitungsanordnung verbunden, in die Seitenleuchtenanordnung integriert und, im Falle des vollständigen Vergusses mit Vergussmaterial, später wieder freigelegt werden. In wieder anderer vorteilhafter Ausführungsform können Adern der mehradrigen Leitungsanordnung der Seitenleuchtenanordnung mittels ein Isoliermaterial durchdringender Spitzen- oder Schneidenkontakte einer Anschlussvorrichtung kontaktiert sein.

In vorteilhafter Ausführungsform kann die Seitenleuchtenanordnung mit integrierten Seitenmarkierungsleuchten frontseitig oder heckseitig, insbesondere im Heckbereich eines Fahrzeugs auch entlang der Fahrzeuglängsseite im Bereich von Radanordnungen, durch ein Anschlusskabel fortgesetzt sein. Ein solches Anschlusskabel kann im Frontbereich bis zu einem frontseitigen Verteiler bei der Fahrzeugmittellängsebene geführt sein.

Im Heckbereich kann ein solches Anschlusskabel vorteilhafterweise fest mit einer Heckleuchtenanordnung verbunden, insbesondere an dieser in abgedichteter Weise unlösbar befestigt sein. Die Seitenleuchtenanordnung erstreckt sich vorteilhafterweise über wenigstens die Hälfte, vorzugsweise wenigstens zwei Drittel der Länge des Fahrzeugs.

Vorteilhafterweise ist ein solches Anschlusskabel um Vorderkante bzw. Hinterkante des Fahrzeugs geführt. Weitere Fahrzeugleuchten, insbesondere Spurhalteleuchten, können vorteilhafterweise über die Kabelisolierung durchdringende Spitzen- oder Schneidenkontakte mit Adern des Kabels kontaktiert sein, ohne diese zu unterbrechen. In anderer Ausführungsform kann an den Vorderkanten und/oder Hinterkanten des Fahrzeugs, insbesondere bei im wesentlichen rechtwinkligen Übergängen ohne nennenswerte Rundungen, eine spezielle Eckverbindungseinrichtung vorgesehen sein, an welche ein Anschlusskabel oder die Leitungsanordnung der Seitenleuchtenanordnung anschließbar ist. Eine solche Eckverbindungseinrichtung kann Bestandteil einer Heckleuchte sein und/oder kann eine Spurhalteleuchte enthalten.

Die Adern der Leitungsanordnung der Seitenleuchtenanordnung sind vorteilhafterweise in einem Leitungsträger miteinander verbunden. Der Leitungsträger ist vorteilhafterweise zugleich als Schaltungsträger für die lichtemittierenden Elemente und weitere elektronische Bauelemente von Schaltungsanordnungen zum Betrieb der lichtemittierenden Elemente ausgebildet und kann hierfür insbesondere weitere Leitungen, z. B. als Leiterbahnen, und Anschlussflächen aufweisen. Die Leitungsanordnung ist vorteilhafterweise flexibel.

Die Erfindung ist nachfolgend anhand bevorzugter Beispiele unter Bezugnahme auf die Abbildungen noch eingehend veranschaulicht. Dabei zeigt:
- Fig. 1: schematisch wesentliche Teile einer Fahrzeugleuchtenanordnung,
- Fig. 2: einen Ausschnitt mit einem hinteren Eckbereich,
- Fig. 3: eine alternative Ausführung zu Fig. 2,
- Fig. 4: einen Schnitt durch eine bevorzugte Ausführung einer Seitenleuchtenanordnung.

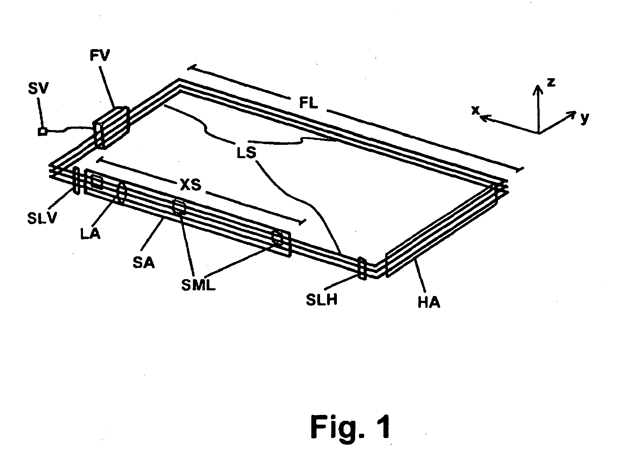

Fig. 1 zeigt in Schrägansicht schematisch eine erfindungsgemäße Fahrzeugleuchtenanordnung, z. B. eines Anhängers, mit einem Leitungssystem LS, welches mehrere Leuchten mit einem frontseitigen Verteiler FV verbindet. Der Verteiler FV sei als Energiequelle für die an das Leitungssystem angeschlossenen Verbraucher betrachtet und bezieht typischerweise die elektrische Leistung zum Betrieb der anhängerseitigen Fahrzeugleuchtenanordnung über eine Stekkerverbindung SV von einem Zugfahrzeug. Der Anhänger kann auch, insbesondere für eine Standbeleuchtung ohne Zugfahrzeug, eine eigene Energiequelle z. B. in Form eines mit dem Verteiler verbundenen Akkus enthalten.

Von dem Verteiler, welcher typischerweise nahe bei der Mittellängsebene des Fahrzeugs angebracht ist, führen nach beiden Seiten mehradrige Leitungen zu den Außenseiten des Fahrzeugs, in Fahrzeuglängsrichtung (x-Richtung) außen an den Längsseiten des Fahrzeugs entlang bis zum Fahrzeugheck und von dort wieder quer zur Fahrzeuglängsrichtung in Richtung (y-Richtung) zur Mittellängsebene des Fahrzeugs. Die Leitungen des Leitungssystems versorgen beispielsweise vordere Spurhalteleuchten SLV, Seitenmarkierungsleuchten SML, hintere Spurhalteleuchten SLH und eine Heckleuchtenanordnung HA, welche insbesondere Rückleuchten, Bremsleuchten, Blinkleuchten, Kennzeichenleuchten, Rückfahrscheinwerfer und Nebelschlussleuchte umfasst und zusätzlich auch noch z. B. Arbeitsscheinwerfer, mittige Warnleuchte usw. enthalten kann.

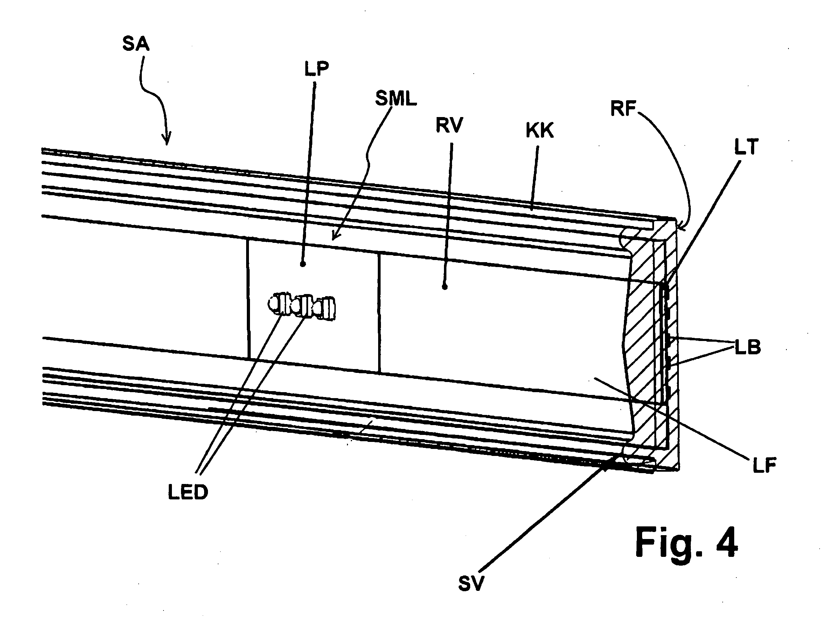

Die in x-Richtung verlaufenden Leitungen entlang einer Längsseite des Fahrzeugs sind zumindest über einen Abschnitt XS, welcher vorteilhafterweise wenigstens die Hälfte, vorzugsweise wenigstens zwei Drittel der Fahrzeuglänge FL beträgt, mit Seitenmarkierungsleuchten SML in einer Seitenleuchtenanordnung SA integriert und bilden eine Leitungsanordnung LA in der Seitenleuchtenanordnung. Mehrere Seitenmarkierungsleuchten SML sind in Längsrichtung x voneinander beabstandet in der Seitenleuchtenanordnung SA integriert und innerhalb der Seitenleuchtenanordnung mit Leitungen der Leitungsanordnung LA kontaktiert. Seitenmarkierungsleuchten SML und Leitungsanordnung LA sind vorteilhafterweise in einem einstückig zusammenhängenden Leuchtenkörper der Seitenleuchtenanordnung SA eingeschlossen und vorzugsweise im wesentlichen hohlraumfrei von einer Vergussmasse umgeben. Ein bevorzugtes Ausführungsbeispiel ist zu Fig. 4 noch eingehend erläutert.

Die Seitenleuchtenanordnung kann sich auch über die gesamte Länge des Fahrzeugs entlang einer Außenseite erstrecken und kann auch um vordere und/oder hintere Ecken umgelenkt und ununterbrochen fortgesetzt sein. In die Seitenleuchtenanordnung können auch die vordere und/oder die hintere Spurhalteleuchte integriert sein.

Die Leitungsanordnung LA in der Seitenleuchtenanordnung enthält vorteilhafterweise mehr einzelne gegeneinander isolierte Leitungen des Leitungssystems als für den Betrieb der Seitenmarkierungsleuchten erforderlich sind. Für die Seitenmarkierungsleuchten sowie gegebenenfalls für mit integrierte Spurhalteleuchten, welche immer gemeinsam mit den Seitenmarkierungsleuchten in Betrieb sind, sind im Regelfall nur zwei Leitungen erforderlich, von welchen eine vorteilhafterweise auch für weitere Leuchtenstromkreise als gemeinsame Masseleitung dient. Die weiteren Leitungen der Leitungsanordnung sind in Längsrichtung x durch die Seitenleuchtenanordnung ohne weitere elektrische Funktion hindurchgeführt.

Die Seitenleuchtenanordnung SA kann unabhängig vom Fahrzeug, gegebenenfalls auf dessen Maße abgestimmt, vorbereitet werden und als einheitlich handhabbares Modul am Fahrzeug befestigt werden, ohne dass die Seitenmarkierungsleuchten einzeln an ein Versorgungskabel angeschlossen werden müssen. Durch die Aufnahme von Versorgungsleitungen für Heckleuchten in die Seitenleuchtenanordnung braucht kein zusätzliches Versorgungskabel zu den Heckleuchten geführt werden, was gleichfalls günstig hinsichtlich des Montageaufwands ist.

Vorteilhafterweise enthalten die beidseitigen Leitungsanordnungen für jede unabhängig von anderen Leuchten betreibbare Heckleuchte eine eigene Versorgungsleitung, so dass zu jeder unabhängigen Leuchtenfunktion ein unabhängiger Stromkreis vorteilhafterweise allein gegen Überstrom abgesichert sein kann.

Die Leitungsanordnung LA ist vorteilhafterweise ununterbrochen bis zu dem vorderen Verteiler fortgeführt. Eine vordere Spurhalteleuchte kann vorteilhaft in die Seitenleuchtenanordnung integriert oder in anderer vorteilhafter Ausführung ohne Unterbrechung der Leitungsanordnung an diese angeschlossen sein, insbesondere über eine isolierende Umhüllung der Leitungen durchdringende Kontaktspitzen oder Kontaktschneiden Leitungen der Leitungsanordnung kontaktieren. Dabei kann auch ein Kabel an die Leitungsanordnung angeschlossen sein, welches mehr als eine Leuchte, beispielsweise mehrere Umrissleuchten, welche auch höher, d. h. in z-Richtung beabstandet, angeordnet sein können, versorgt.

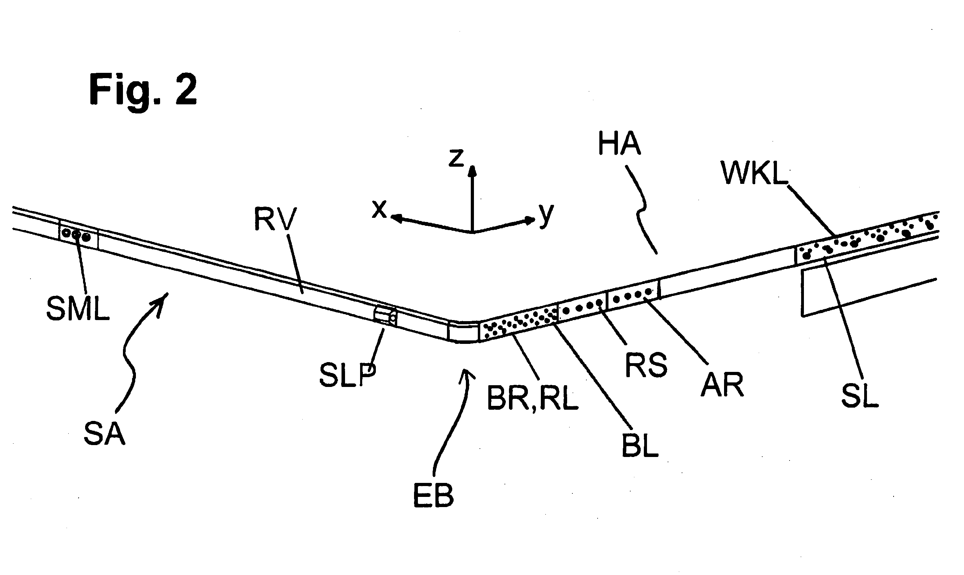

In Fig. 2 ist eine vorteilhafte Ausführungsform der erfindungsgemäßen Fahrzeugleuchtenanordnung in einem hinteren linken Eckbereich skizziert. Die entlang der linken Fahrzeuglängsseite geführte Seitenleuchtenanordnung SE ist als bandförmiges Profil ausgeführt, welches vorzugsweise durch Extrusion einer Kunststoff-Vergussmasse hergestellt ist. In dem Kunststoff eingeschlossen, vorzugsweise von diesem im wesentlichen hohlraumfrei umgeben, verläuft die mehradrige Leitungsanordnung LA. In Längsrichtung voneinander beabstandet sind mehrere Seitenmarkierungsleuchten SML mit lichtemittierenden Dioden (LED) in die Vergussmasse eingeschlossen und mit zwei Adern der Leitungsanordnung LA kontaktiert. Zusätzlich in das Kunststoff-Profil eingeschlossen sein kann vorteilhafterweise eine Reflektorvorrichtung RV. Einzelheiten zu einer besonders vorteilhaften Ausführung einer solchen als extrudiertes Profil ausgeführten Seitenleuchtenanordnung sind zu Fig. 4 noch ausführlich beschrieben.

Die Seitenleuchtenanordnung SA setzt sich in diesem Beispiel nach Fig. 2 in einem hinteren linken Eckbereich EB ohne Unterbrechung der Leitungsanordnung, vorzugsweise auch ohne Unterbrechung des durch die Vergussmasse gebildeten Leuchtenkörpers, um die hintere linke Fahrzeugecke fort in eine quer zur Fahrzeuglängsrichtung in y-Richtung verlaufende Heckleuchtenanordnung HA. Die Heckleuchtenanordnung HA zeigt bei Ausführung der Seitenleuchtenanordnung SA als extrudiertes Profil vorzugsweise denselben Querschnitt wie die Seitenleuchtenanordnung. Die Heckleuchtenanordnung enthält mehrere unterschiedliche Beleuchtungsfunktionen zugeordnete Leuchtenbereiche, welche auch flächig überdeckend ineinander geschachtelt sein können. Beispielsweise folgen auf den Eckbereich EB zur Fahrzeugmitte hin ein erster für Bremslicht BR und Rücklicht RL gemeinsamer Bereich, ein zweiter Bereich für linkes Blinklicht, ein dritter Bereich als Rückfahrscheinwerfer RS, ein vierter Bereich als Arbeitsscheinwerfer AR und beabstandet bei der Fahrzeugmitte ein weiterer kombinierter Bereich WKL für Warn- und Bremslicht und Kennzeichenbeleuchtung.

Die einzelnen Leuchtenbereiche sind vorteilhafterweise auf einem gemeinsamen durchgehenden Platinenband, auf dessen Rückseite oder von welchem eingeschlossen die einzelnen Versorgungsleitungen verlaufen, angeordnet. Bereiche mit höherer Verlustleistung der lichtemittierenden Bauelemente oder anderer Bauelemente können vorteilhafterweise mit einer Schicht aus gut wärmeleitendem Material, beispielsweise einem Aluminiumblech, hinterlegt sein und in gut wärmeleitendem Kontakt mit dieser Schicht stehen. Das gut wärmeleitende Material verteilt die punktuell anfallende Verlustwärmeleistung schnell auf eine größere Fläche und schützt dadurch die einzelnen Bauelemente vor Überhitzung.

Die Versorgungsleitungen können jeweils so weit geführt werden, wie dies für den Betrieb der einzelnen Leuchten erforderlich ist. Beispielsweise können die unabhängigen Versorgungsleitungen für Rückfahrscheinwerfer RS und Arbeitsscheinwerfer AR an den jeweiligen Leuchtenbereichen enden. In anderer vorteilhafter Ausführung sind die Versorgungsleitungen in gleichbleibender Zahl über das gesamte Platinenband fortgeführt. Hierdurch kann vorteilhafterweise als Ausgangsmaterial ein Leitungsträger mit durchgehend konstanter Anzahl und konstantem Querschnitt von gegeneinander isolierten Leitungen, beispielsweise als Rollenmaterial verwandt werden, auf welchem die Bauelemente für die einzelnen Leuchten aufgebracht werden, wobei die Bauelemente für die einzelnen Leuchten auch auf separaten Platinen, insbesondere flexiblen Folienplatinen vorbereitetet sein können, welche dann mit dem einheitlich durchgehenden Leitungsträger an den jeweiligen Leuchtenpositionen aufgebracht und mit den betreffenden Leitungen kontaktiert werden.

In besonderer Ausführungsform kann auch ein die beiden Seitenleuchtenanordnungen SA und die Heckleuchtenanordnung HA enthaltender, einstückig um die hinteren Ecken ununterbrochen durchgehender Leuchtenkörper vorgesehen sein, welcher vorzugsweise dann auch um die vorderen Fahrzeugecken bis zum frontseitigen Verteiler umgelenkt ist.

In Fig. 2 ist mit SLP noch eine vorteilhafte Sonderform einer Spurhalteleuchte bezeichnet. Die lichtemittierenden Elemente der einzelnen Leuchtenbereiche strahlen typischerweise hauptsächlich senkrecht zu ihrer jeweiligen Montagefläche, d. h. horizontal quer zum Längsverlauf des bandförmigen Leuchtenkörpers ab. Ausnahmen hiervon können lichtemittierende Elemente für die Kennzeichenbeleuchtung bilden, welche als sogenannte Side-LEDs mit Hauptabstrahlrichtung parallel zur Trägerfläche ausgeführt sein können und durch die untere Kante des Leuchtenkörpers, aber wiederum quer zum Längsverlauf des bandförmigen Leuchtenkörpers abstrahlen. Die Spurhalteleuchten strahlen hingegen mit unterschiedlichen Farben im wesentlichen parallel zur Längsrichtung nach vorne und nach hinten ab. Zur Realisierung eines solchen Abstrahlverhaltens ist bei der Spurhalteleuchte SLP vorgesehen, dass in dem Leuchtenkörper der Seitenleuchtenanordnung SA für die Spurhalteleuchtenfunktion lichtemittierende Elemente vorgesehen sind, welche im wesentlichen horizontal und quer zum Längsverlauf des bandförmigen Leuchtenkörpers abstrahlen. An der Position dieser lichtemittierenden Elemente ist auf den Leuchtenkörper ein optisch passives Bauteil aufgesetzt, welches die quer zur Längsrichtung des Leuchtenkörpers abgestrahlten Lichtanteile nach hinten und nach vorne im wesentlichen parallel zum Längsverlauf des Leuchtenkörpers der Seitenleuchtenanordnung SA umlenkt.

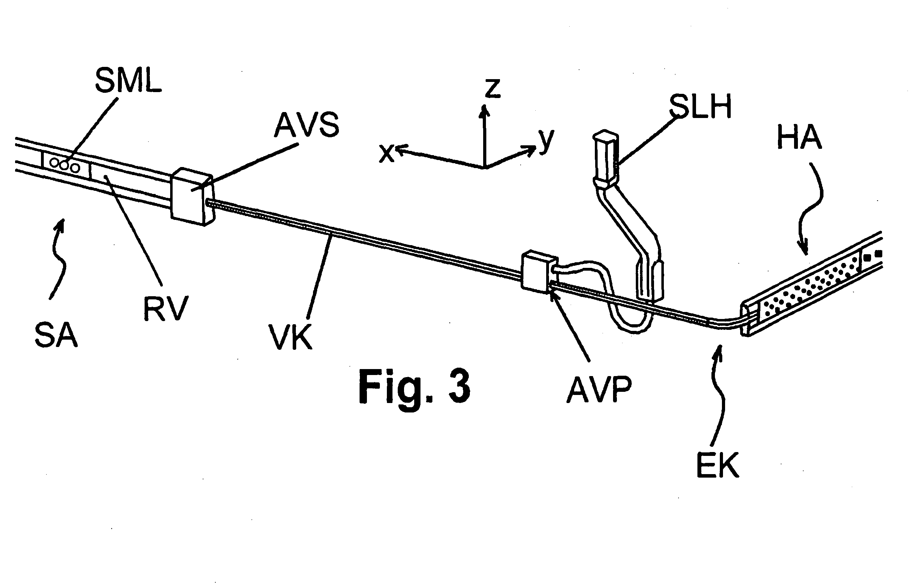

In Fig. 3 ist eine andere Ausführung eines hinteren linken Eckbereichs einer erfindungsgemäßen Fahrzeugleuchtenanordnung skizziert. Hierbei ist die Seitenleuchtenanordnung SA, für welche wieder ein Leuchtenkörper nach Art eines Profils mit gleichförmigen Querschnitt angenommen sein kann, nicht bis zu dem Eckbereich geführt, sondern hört von diesem in Längsrichtung des Fahrzeugs beabstandet auf. Das hintere Ende der Seitenleuchtenanordnung SA ist über eine Anschlussvorrichtung AVS mit einem mehradrigen Verbindungskabel VK verbunden, welches zu der Heckleuchtenanordnung HA führt und beispielsweise unslöbar mit dieser verbunden, insbesondere in eine Vergussmasse der Heckleuchtenanordnung HA mit eingegossen sein kann.

Ein Verbindungskabel VK, welches im skizzierten Beispiel der Einfachheit halber als geradlinig den Verlauf der Seitenleuchtenanordnung SA fortsetzend eingezeichnet ist, ist insbesondere von Vorteil bei Fahrzeugformen, bei welchen in einem Heckbereich die dortigen Radanordnungen einer durchgehenden Fortführung der Seitenleuchtenanordnung SA entgegenstehen. Das Verbindungskabel VK kann dabei abweichend von dem in Fig. 3 skizzierten geraden Verlauf den Gegebenheiten des jeweiligen Fahrzeugaufbaus folgend verlegt werden. Das Verbindungskabel VK ist vorteilhafterweise in der Anschlussvorrichtung AVS mittels die Kabelisolierung durchdringender Kontaktspitzen oder Kontaktschneiden angeschlossen, so dass die genaue Länge des Verbindungskabels nicht a priori festgelegt werden muss und Heckleuchtenanordnung HA für unterschiedliche Fahrzeuge in einheitlicher Form vorgefertigt werden können.

Eine hintere Spurhalteleuchte SLH ist im Beispiel der Fig. 3 auf vorteilhafte Weise ohne Unterbrechung des Verbindungskabels VK an dieses über eine Anschlussvorrichtung AVP angeschlossen, wobei in der Anschlussvorrichtung AVP wiederum eine Kontaktierung von Adern des Verbindungskabels über Spitzenkontakte oder Schneidkontakte durch die Kabelisolierung hindurch erfolgt.

Die Fig. 4 zeigt ein bevorzugtes Ausführungsbeispiel einer Seitenleuchtenanordnung in Form eines als Profil extrudierten Kunststoffkörpers KK, in welchen ein bandförmiger flacher Leitungsträger LT eingebettet ist. Der Leitungsträger LT enthält mehrere gegeneinander isolierte Leitungen LB als Versorgungsleitungen und als gemeinsame Masseleitung für verschiedene Leuchten. Der Leuchtenkörper KK der Seitenleuchtenanordnung SA weist eine im wesentlichen ebene Rückfläche RF und eine dieser abgewandte Lichtaustrittsfläche LF auf. Das den Leuchtenkörper KK bildende Kunststoff-Vergussmaterial ist zumindest im Bereich der Lichtaustrittsfläche LF transparent. Vorzugsweise ist der gesamte Kunststoffkörper materialhomogen. Die der Rückfläche abgewandte Vorderseite ist im skizzierten vorteilhaften Beispiel noch dahingehend strukturiert, dass seitlich des Streifens der Lichtaustrittsfläche LF oben und unten jeweils Vorsprünge SV auftreten, welche der Rückfläche abgewandt über die Lichtaustrittsfläche hinausstehen und für diese damit einen mechanischen Schutz gegen Beschädigung bieten. Nach oben und unten vorstehend können Montagestege MS oder andere Befestigungselemente an dem Leuchtenkörper ausgebildet sein.

Auf dem Leitungsträger LT direkt oder auf einer zusätzlichen Leuchtenplatine LP angeordnet sind lichtemittierende Elemente in Form von Leuchtdioden LED, welche für die Leuchtenfunktion der Seitenmarkierungsleuchten vorgesehen sind. Weitere gegebenenfalls vorhandene Bauelemente als Beschaltung der Leuchtdioden sind nicht mit eingezeichnet. Die Leuchtdioden LED sind aus einer Versorgungsleitung und einer mit anderen Leuchten gemeinsamen Masseleitung aus den Leitungen LB des Leitungsträgers LT versorgt. Die übrigen Leitungen LB der Leitungsanordnung innerhalb der Seitenleuchtenanordnung erfüllen in letzterer keine elektrische Funktion und sind lediglich in Längsrichtung durchgeführt. Zusätzlich in dem Kunststoff des Leuchtenkörpers KK eingeschlossen sind Reflektorvorrichtungen RV, welche seitlich der Platine LP der Seitenmarkierungsleuchten SML liegen können, welche aber auch durchgehend, beispielsweise als reflektierender Lack ausgeführt sein können.

Zur Herstellung einer Seitenleuchtenanordnung nach Fig. 4 kann vorteilhafterweise der Leitungsträger LT mit Reflektorvorrichtungen und Seitenmarkierungsleuchten bandförmig vorbereitet sein und durch die Extrusionsdüse einer Extrusionsvorrichtung während des Extrusionsvorganges hindurchgeführt werden, wobei der Leitungsträger mit Reflektorvorrichtungen und Seitenmarkierungsleuchte allseitig und im wesentlichen hohlraumfrei von dem Kunststoffmaterial umflossen werden.

Je nach Ausführungsform kann die Seitenleuchtenanordnung SA anfänglich in großer Länge hergestellt und für die einzelnen Seitenleuchtenanordnungen SA in passender Länge abgetrennt werden. Bei der Vorbereitung eines Platinenbandes mit Leuchtenträger LT und Seitenmarkierungsleuchten SML kann auch bereits ein Teil einer Anschlussvorrichtung vorbereitet und elektrisch mit den Leitungen LB des Leitungsträgers LT verbunden sein. Dieser Teil der Anschlussvorrichtung wird mit durch die Extrusionsdüse geführt und dabei von Kunststoff umflossen. Zur Herstellung eines Anschlusses beispielsweise in einer Anschlussvorrichtung AVS, wie in Fig. 3, wird der vergossene Teil einer solchen Anschlussvorrichtung nachträglich wieder freigelegt. Zur Herstellung eines von einer Seitenleuchtenanordnung SA in eine Heckleuchtenanordnung HA durchgehenden Leuchtenkörpers wird vorteilhafterweise auch die Bestükkung für die Heckleuchtenanordnung auf dem Leitungsträger bzw. weiteren Leuchtenplatinen vor dem Extrusionsvorgang vorgenommen und der gesamte Leuchtenkörper mit Seitenleuchtenanordnung SA und Heckleuchtenanordnung HA in einem Durchgang extrudiert.

## Patentansprüche

1. Fahrzeugleuchtenanordnung mit Seitenmarkierungsleuchten und Heckleuchten, welche über Leitungen eines Leitungssystems mit einer frontseitigen elektrischen Energiequelle verbunden sind, wobei das Leitungssystem beidseitig entlang der Außenlängsseiten des Fahrzeugs verlaufend je eine mehradrige Leitungsanordnung umfasst und die Leitungsanordnungen zumindest mehrere der Heckleuchten elektrisch mit der frontseitigen Energiequelle verbinden, **dadurch gekennzeichnet, dass** jede der beiden Leitungsanordnungen mit mehreren Seitenmarkierungsleuchten in je einer Seitenleuchtenanordnung integriert ist, wobei die Seitenmarkierungsleuchten mit Adern der Leitungsanordnung kontaktiert sind.

2. Anordnung nach Anspruch 1, **dadurch gekennzeichnet, dass** die Seitenleuchtenanordnung in einer Profilhalterung an der Fahrzeuglängsseite gehalten ist.

3. Anordnung nach Anspruch 1, **dadurch gekennzeichnet, dass** die Seitenleuchtenanordnung flexibel ist.

4. Anordnung nach Anspruch 3, **dadurch gekennzeichnet, dass** die Leitungsanordnung ohne Unterbrechung aus einem Verlauf entlang einer Fahrzeuglängsseite um eine frontseitige und/oder eine heckseitige Ecke des Fahrzeugs umgelenkt ist.

5. Anordnung nach Anspruch 4, **dadurch gekennzeichnet, dass** die Leitungsanordnung bis zu einer frontseitigen elektrischen Leistungsquelle, insbesondere einer Anschluss- und Verteilereinrichtung eines Anhängers führt.

6. Anordnung nach einem der Ansprüche 1 bis 5, **dadurch gekennzeichnet, dass** die Leitungsanordnung ohne Unterbrechung in wenigstens einen Teil der Heckleuchtenanordnung fortgeführt ist.

7. Anordnung nach Anspruch 6, **dadurch gekennzeichnet, dass** zwei an gegenüber liegenden Fahrzeuglängsseiten verlaufende Seitenleuchtenanordnungen mit einer quer zur Fahrzeuglängsachse durchgehenden Heckleuchtenanordnung eine ohne Unterbrechung zusammenhängende Leuchtenanordnung bilden.

8. Anordnung nach einem der Ansprüche 1 bis 7, **dadurch gekennzeichnet, dass** zwischen Seitenleuchtenanordnung und Heckleuchten ein Anschlusselement mit mehreren Kontakten eingefügt ist.

9. Anordnung nach einem der Ansprüche 1 bis 8, **dadurch gekennzeichnet, dass** zwischen Seitenleuchtenanordnung und Heckleuchte ein mehradriges Verbindungskabel eingefügt ist.

10. Anordnung nach einem der Ansprüche 1 bis 9, **dadurch gekennzeichnet, dass** die Leitungsanordnung mehr gegeneinander isolierte Leitungen enthält als für den Betrieb der Seitenmarkierungsleuchten erforderlich sind.

11. Anordnung nach einem der Ansprüche 1 bis 10, **dadurch gekennzeichnet, dass** die Leitungen der Leitungsanordnung in einem Leitungsträger miteinander verbunden sind.

12. Anordnung nach Anspruch 11, **dadurch gekennzeichnet, dass** der Leitungsträger zugleich als Schaltungsträger für lichtemittierende Elemente und gegebenenfalls weitere elektronische Bauelemente dient.

13. Anordnung nach Anspruch 11 oder 12, **dadurch gekennzeichnet, dass** der Leitungsträger flexibel ist.

14. Anordnung nach einem der Ansprüche 1 bis 11, **dadurch gekennzeichnet, dass** in die Seitenleuchtenanordnung Reflektoreinrichtungen integriert sind.

15. Anordnung nach einem der Ansprüche 1 bis 14, **dadurch gekennzeichnet, dass** eine nach vorn und nach hinten strahlende Spurhalteleuchte durch eine passive Lichtumlenkvorrichtung gebildet ist, welche über einer zur Seite abstrahlenden Leuchte der Seitenleuchtenanordnung angeordnet ist.

16. Anordnung nach einem der Ansprüche 1 bis 15, **dadurch gekennzeichnet, dass** weitere Leuchtenanordnungen an den Leuchtenkörper ohne Unterbrechung der Leitungen der Leitungsanordnung über Spitzen- oder Schneidenkontakte angeschlossen sind.

17. Anordnung nach einem der Ansprüche 1 bis 16, **dadurch gekennzeichnet, dass** eine Seitenleuchtenanordnung einen die Leitungsanordnung und mehrere Seitenmarkierungsleuchten einhüllenden einstückigen Leuchtenkörper enthält.

18. Anordnung nach Anspruch 17, **dadurch gekennzeichnet, dass** der Leuchtenkörper als ein Vergusskörper aus einer isolierenden Vergussmasse ausgeführt ist, dass die mehradrige Leitungsanordnung und die mit dieser elektrisch verbundenen Seitenmarkierungsleuchten von dem Vergussmaterial im wesentlichen hohlraumfrei umschlossen sind und dass das Vergussmaterial zumindest in Haupt-Abstrahlrichtung der Seitenmarkierungsleuchten transparent ist.

19. Anordnung nach Anspruch 17 oder 18, **dadurch gekennzeichnet, dass** der Leuchtenkörper über wenigstens die Hälfte, vorzugsweise wenigstens zwei Drittel der Länge des Fahrzeugs erstreckt

## Claims

1. Vehicle lighting arrangement having side marker lights and rear lights which are connected to a front electrical power source via lines of a line system, wherein the line system comprises a multi-conductor line arrangement running along each of the two outer longitudinal sides of the vehicle, and the line arrangements connect at least a plurality of the rear lights electrically to the front power source, **characterized in that** each of the two line arrangements is integrated with a plurality of side marker lights into, in each case, one side light arrangement, wherein the side marker lights are placed in contact with conductors of the line arrangement.

2. Arrangement according to Claim 1, **characterized in that** the side light arrangement is held in a profile fitting on the longitudinal side of the vehicle.

3. Arrangement according to Claim 1, **characterized in that** the side light arrangement is flexible.

4. Arrangement according to Claim 3, **characterized in that** the line arrangement is diverted, without interruption, from a profile along a longitudinal side of the vehicle around a front and/or rear corner of the vehicle.

5. Arrangement according to Claim 4, **characterized in that** the line arrangement leads to a front electrical power source, in particular a connecting and distributing device of a trailer.

6. Arrangement according to one of Claims 1 to 5, **characterized in that** the line arrangement is continued into at least part of the rear light arrangement without interruption.

7. Arrangement according to Claim 6, **characterized in that** two side light arrangements which run on longitudinal sides of the vehicle which lie opposite one another form, with a rear light arrangement which passes through transversely with respect to the longitudinal axis of the vehicle, a light arrangement which is coherent without interruption.

8. Arrangement according to one of Claims 1 to 7, **characterized in that** a connecting element with a plurality of contacts is inserted between the side light arrangement and rear lights.

9. Arrangement according to one of Claims 1 to 8, **characterized in that** a multi-conductor connecting cable is inserted between the side light arrangement and rear light.

10. Arrangement according to one of Claims 1 to 9, **characterized in that** the line arrangement contains more lines which are insulated from one another than are necessary for the operation of the side marker lights.

11. Arrangement according to one of Claims 1 to 10, **characterized in that** the lines of the line arrangement are connected to one another in a line carrier.

12. Arrangement according to Claim 11, **characterized in that** the line carrier serves at the same time as a circuit carrier for light-emitting elements and, if appropriate, further electronic components.

13. Arrangement according to Claim 11 or 12, **characterized in that** the line carrier is flexible.

14. Arrangement according to one of Claims 1 to 11, **characterized in that** reflector devices are integrated into the side light arrangement.

15. Arrangement according to one of Claims 1 to 14, **characterized in that** a lane keeping light which radiates towards the front and towards the rear is formed by a passive light deflector device which is arranged above a light in the side light arrangement which irradiates to the side.

16. Arrangement according to one of Claims 1 to 15, **characterized in that** further light arrangements are connected to the light body without interruption of the lines of the line arrangement by means of point contacts or cutter contacts.

17. Arrangement according to one of Claims 1 to 16, **characterized in that** a side light arrangement contains a single-piece light body which encloses the line arrangement and a plurality of side marker lights.

18. Arrangement according to Claim 17, **characterized in that** the light body is embodied as a cast body made of an insulating casting material, **in that** the multi-conductor line arrangement and the side marker lights which are connected electrically to it are enclosed by the casting material substantially without a cavity, and **in that** the casting material is transparent at least in the main irradiation direction of the side marker lights.

19. Arrangement according to Claim 17 or 18, **characterized in that** the light body extends over at least half, preferably at least two thirds the length of the vehicle.

## Revendications

1. Dispositif d'éclairage pour un véhicule avec des feux de gabarit latéraux et des feux arrière reliés à une source d'énergie électrique située côté avant via les câbles d'un système de câbles, le système de câbles comprenant respectivement des deux côtés, le long des côtés longitudinaux extérieurs du véhicule, un agencement de câbles à plusieurs brins et les agencements de câbles reliant électriquement au moins plusieurs feux arrière à la source d'énergie située côté avant, **caractérisé en ce que** chacun des deux agencements de câbles est respectivement intégré à plusieurs feux de gabarit latéraux dans un agencement de feux latéraux, les feux de gabarit latéraux entrant en contact avec les brins de l'agencement de câbles.

2. Agencement selon la revendication 1, **caractérisé en ce que** l'agencement de feux latéraux est maintenu dans une fixation profilée située au niveau du côté longitudinal du véhicule.

3. Agencement selon la revendication 1, **caractérisé en ce que** l'agencement de feux latéraux est flexible.

4. Agencement selon la revendication 3, **caractérisé en ce que** l'agencement de câbles est dévié sans interruption d'une courbe située le long d'un côté longitudinal du véhicule au niveau d'un coin du véhicule situé côté avant et/ou côté arrière.

5. Agencement selon la revendication 4, **caractérisé en ce que** l'agencement de câbles conduit jusqu'à une source de puissance électrique située côté avant, notamment un dispositif de raccordement et d'allumage d'une remorque.

6. Agencement selon l'une quelconque des revendications 1 à 5, **caractérisé en ce que** l'agencement de câbles se poursuit sans interruption dans au moins une partie de l'agencement de feux arrière.

7. Agencement selon la revendication 6, **caractérisé en ce que** deux agencements de feux latéraux s'étendant au niveau des côtés longitudinaux du véhicule forment un agencement de feux rattaché sans interruption à un agencement de feux arrière traversant transversal par rapport à l'axe longitudinal du véhicule.

8. Agencement selon l'une quelconque des revendications 1 à 7, **caractérisé en ce qu'**un élément de raccordement doté de plusieurs contacts est inséré entre l'agencement de feux latéraux et les feux arrière.

9. Agencement selon l'une quelconque des revendications 1 à 8, **caractérisé en ce qu'**un câble de jonction à plusieurs brins est inséré entre l'agencement de feux latéraux et le feu arrière.

10. Agencement selon l'une quelconque des revendications 1 à 9, **caractérisé en ce que** l'agencement de câbles contient des câbles mieux isolés que nécessaire les uns par rapport aux autres pour le fonctionnement des feux de gabarit latéraux.

11. Agencement selon l'une quelconque des revendications 1 à 10, **caractérisé en ce que** les câbles de l'agencement de câbles sont reliés entre eux dans un porte-câbles.

12. Agencement selon la revendication 11, **caractérisé en ce que** le porte-câbles sert en même temps de porte-circuit pour les éléments électroluminescents et le cas échéant les autres composants électroniques.

13. Agencement selon la revendication 11 ou 12, **caractérisé en ce que** le porte-câbles est flexible.

14. Agencement selon l'une quelconque des revendications 1 à 11, **caractérisé en ce que** des dispositifs réfléchissants sont intégrés dans l'agencement de feux latéraux.

15. Agencement selon l'une quelconque des revendications 1 à 14, **caractérisé en ce qu'**un éclairage de tenue de cap rayonnant vers l'avant et vers l'arrière est formé par un dispositif de déviation de lumière passif disposé au-dessus d'un feu de l'agencement de feux latéraux rayonnant en côté.

16. Agencement selon l'une quelconque des revendications 1 à 15, **caractérisé en ce que** d'autres agencements de feux sont raccordés au corps de feu sans interruption des câbles de l'agencement de câbles par l'intermédiaires de contacts en pointe ou de contacts tranchants.

17. Agencement selon l'une quelconque des revendications 1 à 16, **caractérisé en ce qu'**un agencement de feux latéraux contient l'agencement de câbles et un corps de feu d'un seul tenant enveloppant plusieurs feux de gabarit latéraux.

18. Agencement selon la revendication 17, **caractérisé en ce que** le corps de feu est réalisé comme un corps scellé fabriqué à partir d'une masse de scellement isolante que l'agencement de câbles à plusieurs brins et les feux de gabarit latéraux reliés électriquement avec lui sont entourés pour l'essentiel sans espace vide par le matériau de scellement et que le matériau de scellement est transparent au moins dans la direction de rayonnement principale des feux de gabarit latéraux.

19. Agencement selon la revendication 17 ou 18, **caractérisé en ce que** le corps de feu s'étend sur au moins la moitié, de préférence au moins les deux tiers de la longueur du véhicule.
